# EUROPÄISCHE PATENTANMELDUNG

(11) **EP 2 128 338 A1**
(43) Veröffentlichungstag der Anmeldung: **02.12.2009**
(21) Anmeldenummer: 09160766.3
(22) Anmeldetag: 20.05.2009
(51) Int. Cl.: D21G 1/02, F16C 13/00

(54) **Biegeeinstellwalze**

(30) Priorität: 30.05.2008 DE 102008002112
(71) Anmelder: Voith Patent GmbH, 89522 Heidenheim (DE)
(72) Erfinder: Hißen, Axel, 47803 Krefeld (DE); Autrata, Jochen, 47506 Neukirchen Vluyn (DE); Baumeister, Thomas, 47918 Tönisvorst (DE); Hawix-Bolz, Irmgard, 47665 Sonsbeck (DE); Eßling, Andreas, 46395 Bocholt (DE); Rox, Uwe, 41238 Mönchengladbach (DE)

(57) **Zusammenfassung**

Die Erfindung betrifft eine Biegeeinstellwalze (1) zur Behandlung einer Papier-, Karton-, Tissue- oder einer anderen laufenden Faserstoffbahn (2) in einer Maschine zur Herstellung und/oder Veredlung derselben, mit einem, um eine feststehende, in Lagern (5) abgestützte Achse (3) rotierbaren Walzenmantel (4), welcher von einer Stützeinrichtung (6,16) auf der Achse (3) zur Bildung eines Pressnips (10) für die Faserstoffbahn (2) in Richtung eines Gegendruckelementes (11) gedrückt wird. Um den Kosten- und Fertigungsaufwand solcher Walzen zu verringern, wird die Achse (3) aus zwei im Wesentlichen rotationssymmetrischen Zapfen (7.1,7.2) mit Lagerstellen und einem dazwischenliegenden und mit den beiden Zapfen (7.1,7.2) verbundenen Joch (8) aufbaut.

## Beschreibung

Die Erfindung betrifft eine Biegeeinstellwalze zur Behandlung einer Papier-, Karton-, Tissue- oder einer anderen laufenden Faserstoffbahn in einer Maschine zur Herstellung und/oder Veredlung derselben, mit einem, um eine feststehende, in Lagern abgestützte Achse rotierbaren Walzenmantel, welcher von wenigstens einer Stützeinrichtung auf der Achse zur Bildung eines Pressnips für die Faserstoffbahn in Richtung eines Gegendruckelementes gedrückt wird.

Die Achsen von Biegeeinstellwalzen sind in der Regel vollständig geschmiedet oder gegossen hergestellt, wobei der Achsballen vorzugsweise rund ausgeführt wird. Um die Festigkeitsanforderungen zu erfüllen, haben die Achsen wegen der hohen Presskräfte im Pressnip sowie der Länge von oft über 10 m enorme Dimensionen und damit auch ein sehr hohes Gewicht. Das hohe Gewicht der Achse kann bei sehr breiten Maschinen leicht die Kapazität verfügbarer Hebezeuge übersteigen.

Breite Maschinen mit Biegeeinstellwalzen mit sehr langen Achsen verlangen als Regelorgane des Querprofils der Faserstoffbahn oft mehrere Stützeinrichtungen. Diese sind in der Regel hydrostatische Stützelemente, die über lange Bohrungen oder Rohrbündel aus dem Inneren der Achse versorgt werden. Erschwerend kommt also hinzu, dass sich der Durchmesser der Achse durch die zahlreichen Kanäle im Inneren zur Beibehaltung der Festigkeitseigenschaften noch einmal erhöhen muss.

Derartige Achsen sind nur noch unter enormem Kosten- und Fertigungsaufwand herstellbar.

Die Aufgabe der Erfindung ist es daher, eine Biegeeinstellwalze zu schaffen, deren Achse die beschriebenen Nachteile des Standes der Technik überwindet.

Die Aufgabe wir dadurch gelöst, dass sich die Achse aus zwei im Wesentlichen rotationssymmetrischen Zapfen mit Lagerstellen und einem dazwischenliegenden und mit den beiden Zapfen verbundenen Joch aufbaut.

Bezüglich der erfinderischen Ausgestaltung ist darauf geachtet worden, dass die Walzenenden wie bei herkömmlichen Biegeeinstellwalzen ausgebildet sind. Allerdings werden diese Walzenenden im Bereich der Achse durch zwei rotationssymmetrische, in Bezug auf die Gesamtlänge der Achse relativ kurze Zapfen gebildet. Die Zapfen sind gegossen und/oder geschmiedet und weisen eine Präzision auf, die der Lageraufnahme gerecht wird. Zwischen den Zapfen wird eine Art Zwischenstück, das aus einem oder mehreren Teilen bestehen kann, eingebaut, das im Folgenden Joch genannt wird. Durch die Mehrteiligkeit ist es wesentlich einfacher, die Achse zu produzieren. Da das die Zapfen verbindende Joch auf vielfältige Art und Weise hergestellt und den erforderlichen Festigkeitsanforderungen angepasst werden kann, ist auch die Möglichkeit gegeben, die Gesamtachse möglichst leicht und schwingungsunanfällig zu gestalten.

Dazu ist es von Vorteil, wenn das Joch eine Schweißkonstruktion ist. Ein aus Blechen und/oder Profilen zusammengesetztes Joch kann über Berechnungsverfahren sehr sicher in seinen Festigkeits- und Durchbiegungseigenschaften ausgelegt werden und ist in erkennbarer Weise deutlich leichter als ein in der Regel bis heute verwendetes rotationssymmetrisches Vollmaterial. Durch eine Schweißkonstruktion kann zudem der Platz für Zuführleitungen eines für die Stützeinrichtungen notwendigen Druckfluids geschaffen werden. Dadurch kann auf die heute gebräuchlichen sehr aufwändigen achsparallelen Bohrungen im Inneren der gesamten Achse verzichtet werden.

Günstig ist es, wenn das Joch die Form eines in Achsrichtung der Biegeeinstellwalze langgezogenen und vorzugsweise hohlen Kastens aufweist. Ein solcher Kasten verträgt sehr hohe Biegemomente ohne nennenswerte Durchbiegung.

Vorzugsweise ist die Querschnittsfläche des Jochs an seinen Enden nicht größer als die Stirnfläche des Zapfens. Denn dadurch ist das Joch an seinem gesamten Umfang mit dem Zapfen verbindbar. Beispielsweise kann rund um das Jochende eine Schweißnaht gelegt werden, die das Joch mit jedem Zapfen zu einer Achse vereint. Außerdem braucht der Mantelinnenumfang der Walze nur auf den Außendurchmesser des Zapfens dimensioniert zu werden.

Es ist bevorzugt, dass die Walze über wenigstens einen Kanal in wenigstens einem Zapfen mit einem Druckfluid versorgbar ist. Der Zapfen ist während des Betriebs drehfest gelagert und bildet somit den idealen Ort für die Zuführung des Druckfluids, das für die Stützelemente benötigt wird. Die Durchführung durch den Zapfen ist mit Bohrungen rasch durchzuführen, zumal nicht wie im Stand der Technik die Bohrung auch durch den mittleren Teil der Achse fortgeführt werden muss.

Es ist besonders bevorzugt, wenn in Fließrichtung des Druckfluids gesehen der wenigstens eine Kanal axial in den Zapfen hinein- und radial aus dem Zapfen herausführt. Dazu sind zwar pro Kanal mindesten zwei Bohrungen erforderlich, die sich im Zapfen treffen, nämlich eine achsparallele Einlassbohrung in die Stirnseite des Zapfens und eine bereits unterhalb des Mantels liegende radiale Bohrung hin zum Innenringraum der Biegeeinstellwalze (zwischen Achse und Walzenmantel). Dafür hat man aber die Möglichkeit, auf einfache und zugängliche Weise weiterführende Versorgungsleitungen anzuschließen.

Vorzugsweise ist wenigstens eine Versorgungsleitung entlang der Wandung des Jochs von dem Kanal zu der Stützeinrichtung vorgesehen. Die Versorgungsleitungen, die in Richtung der Stützelemente führen, lassen sich so einfach an der Wandung des Jochs befestigen. Eine beschriebene Schweißkonstruktion in Form eines Kastens begünstigt diesen Aufbau dadurch, dass sowohl innen wie auch außen an den Blechen oder Profilen Rohrleitungen angeschraubt werden können. Und der Kasten kann durch seinen Aufbau eine derartige Form haben, dass genug Freiraum für die Versorgungsleitungen zwischen Joch und dem rotierenden Walzenmantel gegeben ist.

Dabei ist es günstig, wenn die wenigstens eine Versorgungsleitung an einer Außenwandung des Jochs parallel zur Walzenachse befestigt ist und diese zumindest über ein Drittel ihrer Jochlänge überstreicht. Derart lange gerade Versorgungsleitungen lassen sich besonders einfach befestigen und können den Zufluss auch bis zur Walzenmitte hin problemlos sicherstellen.

Es ist von Vorteil, wenn wenigstens eine Stützeinrichtung auf dem Joch mindestens einen Zylinder für einen Kolben eines hydrostatischen Stützelementes umfasst. Hydrostatische Stützelemente für Biegeeinstellwalzen sind allgemein bekannt und haben sich durch ihre zufriedenstellende Wirkungsweise bewährt. Auch in der Joch-Wandung eines aus Blechen geschweißten Kastens lässt sich durch Bohren ein solcher Zylinder integrieren, der wiederum einen hydrostatischen Stützelementkolben aufnehmen kann.

Vorzugsweise ist eine Anschlussleitung für das Druckfluid aus der Versorgungsleitung in den Zylinder im Inneren des Jochs untergebracht. Dort sind sie geschützt untergebracht und nehmen mit ihren Verschraubungen keinen Raum zwischen Achse und Walzenmantel ein.

Besonders bevorzugt ist zumindest ein Teil der Anschlussleitung in oder an einer Stützanordnung der Schweißkonstruktion untergebracht. In gewinnbringender Weise werden beispielsweise Schottbleche in der Schweißkonstruktion des Jochs gleichzeitig als Halterung für die Anschlussleitungen genutzt.

Es ist von großem Vorteil, wenn wenigstens eine Stützeinrichtung im Zapfen vorgesehen ist. Der erste Zylinder für einen hydrostatischen Stützelementkolben einer sich über die gesamte Länge der Achse erstreckenden Stützelementreihe ist erfindungsgemäß dann bereits im Zapfen untergebracht. Auf diese Weise können zu starke Spannungen die auf die Verbindung Zapfen-Joch wirken könnten, wenn nur im Joch Stützelemente vorhanden sind, vermieden werden. Außerdem ist zur Befestigung der Zapfen am Joch eine längere und eifacher herzustellende Schweißnaht möglich, als wenn der Zapfen lediglich im Joch eingesteckt ist.

Als eine bevorzugte Ausgestaltung ist das Joch mit wenigstens einem Profil verbunden, das als Ablaufkanal für aus der Walze geschöpftes Druckfluid dient. Das über die hydrostatischen Stützelemente in den Walzeninnenraum eingeleitete Druckfluid wird in der Regel über Schöpfer und an diese angeschlossene Abflussleitungen wieder aus der Walze herausgeleitet. Insbesondere wenn das Joch als Schweißkonstruktion ausgebildet ist, lässt sich leicht ein zusätzliches Hohlprofil zur Versteifung integrieren, das auch gleichzeitig als Ablaufkanal dienen kann.

Die Erfindung wird im Folgenden anhand von Ausführungsbeispielen unter Bezugnahme auf die Zeichnungen näher erläutert. In dieser zeigen
- Figur 1: eine schematische, längsgeschnittene Darstellung einer erfindungsgemäßen Walze (wobei die rechte und die linke Seite der Zeichnung jeweils zwei unterschiedliche Detailänderungen des Ausführungsbeispiels offenbaren),
- Figur 2: einen Querschnitt durch einen Zapfen der erfindungsgemäßen Walze; entspricht Schnitt A-A in Figur 1,
- Figur 3: einen Querschnitt durch das Joch mit einer Darstellung einer Anschlussleitung; entspricht Schnitt B-B in Figur 1,
- Figur 4: einen alternative Ausführung eines Querschnitts durch das Joch mit einer Darstellung einer Anschlussleitung; entspricht Schnitt C-C in Figur 1,
- Figur 5: eine dreidimensionale Darstellung der Achse der erfindungsgemäßen Walze.

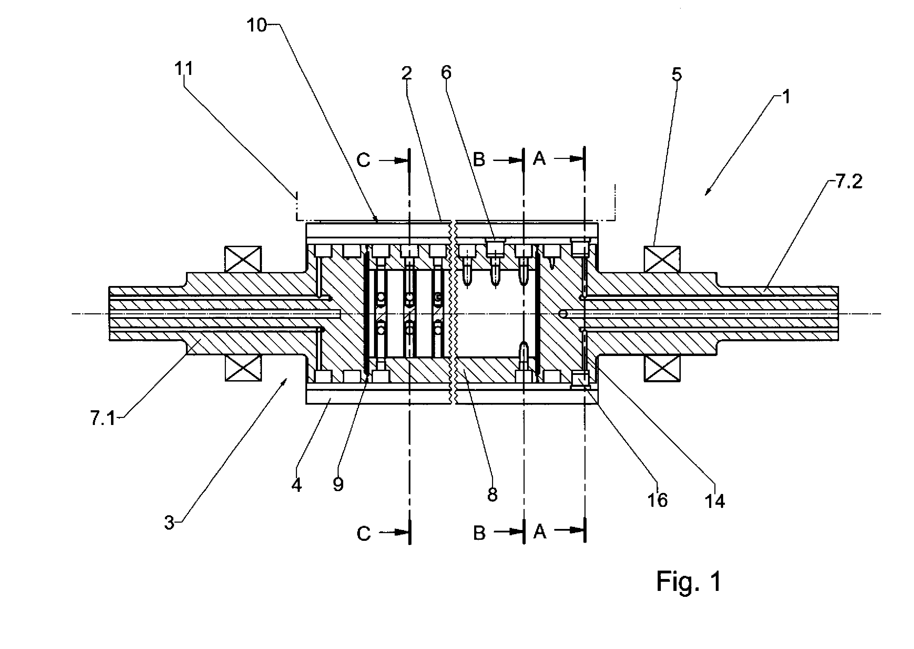

In der Figur 1 ist eine erfindungsgemäße Durchbiegungseinstellwalze 1 dargestellt. Sie arbeitet mit einem Gegendruckelement 11 zusammen, welches nur ansatzweise und gestrichelt dargestellt ist. In der Kontaktfläche, die auch Pressnip 10 genannt wird, wird eine Faserstoffbahn 2 unter Druck behandelt. Solche Walzen werden in der Regel in Kalandern und Pressen verwendet. In ihrem Inneren gibt es Stützeinrichtungen 6, 16, die sich auf der feststehenden Achse 3 abstützen und gegen einen rotierenden Walzenmantel 4 wirken, um diesen in seiner Durchbiegung beeinflussen zu können. An den Enden ist die Achse in Lagern 5 abgestützt, die beispielsweise in der Stuhlung eines Kalanders oder einer Presse untergebracht sind. In der Regel handelt sich um ein (in Fig. 1 stilisiert dargestelltes) Kalottenlager, da die Achse nicht rotiert und das Lager nur die Durchbiegung der Achse 3 aufnehmen muss.

Im Gegensatz zu herkömmlichen Achsen ist die der erfindungsgemäßen Walze aus zwei rotationssymmetrischen Zapfen 7.1,7.2, die auch die Lageraufnahme vorweisen, und einem dazwischen angebrachten Joch 8 zusammengesetzt. Die Achse wird also nicht "aus dem Vollen" gefertigt, sondern besitzt ein Zwischenstück, ein Joch 8, das in einer günstigen Herstellungsform als Schweißkonstruktion 9 ausgebildet ist und einen hohlen Kasten mit geforderten Trägheitsmomenten darstellt. Dadurch wird die gesamte Achse 3 deutlich leichter und viel schneller herstellbar. Im Übrigen muss zur Versorgung der Stützeinrichtungen mit Druckfluid die Achse nicht der Länge nach durchbohrt werden, was bei den heutzutage immer breiter werdenden Kalandern und Pressen sehr problematisch ist.

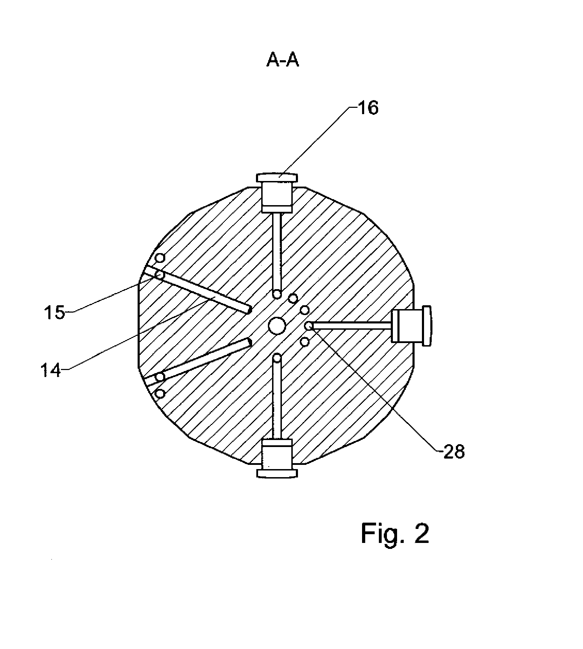

Wie Fig. 2 zeigt, hat man bei der erfindungsgemäßen Walze nur noch den einen oder beide Zapfen 7.1, 7.2 axial anzubohren und lässt diesen Kanal 14 dann weiter radial verlaufen und aus dem Zapfen 7.1, 7.2 an seinem Umfang wieder austreten. Für den Fall, dass bereits eine Stützeinrichtung 16 für den Mantel im Bereich des Zapfens 7.1, 7.2 vorgesehen ist, so stellt auch hier ein Versorgungskanal in der Herstellung kein Problem dar.

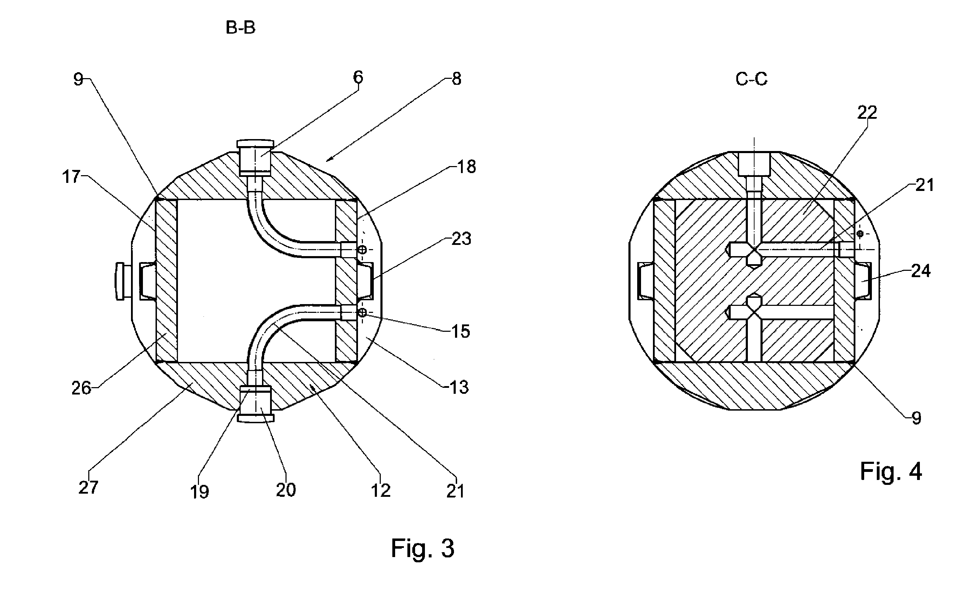

Aus Figur 3 erkennt man den einfachen Aufbau des Jochs. Es besteht im Grunde aus zwei seitlichen Platten 26 und zwei an diesen angeschweißten Deckeln 27, in denen die Aufnahme für wenigstens eine Stützeinrichtung 6 unterbringbar ist. In der Regel ist die Stützeinrichtung 6 ein hydrostatisches Stützelement, das zumindest aus einem Zylinder 19 in dem Deckel 27 und einem Kolben 20 besteht. Unterhalb des Kolbens führt eine Anschlussleitung 21 das Druckfluid in den Zylinder 19. Es bildet sich also ein Druckraum, in dem eine Kraft auf den Kolben 20 wirkt, der wiederum gegen den Mantel 4 drückt. Die Wirkungsweise von hydrostatischen Stützeinrichtungen bei Biegeeinstellwalzen ist bekannt und muss hier nicht weiter erläutert werden.

Die Anschlussleitungen 21 zu den Stützeinrichtungen der Walze können auf einfache Weise vorgefertigt werden und geschützt im Inneren des Jochs untergebracht sein. Dazu werden zunächst drei Seiten, also eine seitliche Platte 26 und zumindest ein Deckel 27 miteinander verbunden, beispielsweise verschweißt. Mit gekrümmten Rohrstücken werden dann die Anschlussleitungen 21 gebildet. Anschließend kann die Schweißkonstruktion 9 durch den zweiten Deckel 27 und die zweite seitliche Platte 26 verschlossen werden.

Von einem Kanal 14 im Zapfen 7.1 oder 7.2 führt eine Versorgungsleitung 15 am Joch entlang zu der Anschlussleitung 21. Die als seitliche Platte 26 ausgebildete Wandung 17, insbesondere die Außenwandung 18, eignet sich besonders gut, um mehrere dieser Versorgungsleitungen 15, die alle jeweils an einer Anschlussleitung 21 für eine Stützeinrichtung 6 enden, zu befestigen. Im Ausführungsbeispiel ist genügend Freiraum zwischen der Wandung der seitlichen Platte 26 und dem Innenumfang des Walzenmantels vorgesehen, um mehrere Versorgungsleitung in der Walze unterzubringen.

Um eine gute Schweißverbindung zwischen Zapfen 7.1, 7.2 und dem Joch realisieren zu können, ist dafür zu sorgen, dass die Querschnittsfläche 12 des Jochs 8 an seinen Enden, die durch die seitlichen Platten 26 und die Deckel 27 bestimmt wird, nicht größer als die Stirnfläche 13 des Zapfens ist.

Figur 4 stellt eine alternative Ausgestaltung der Anschlussleitungen dar. Jede Anschlussleitung ist in Form von zwei Bohrungen in einer Stützanordnung 22, beispielsweise einem Schottblech, eingebracht. Die Stützanordnungen 22 übernehmen nun eine doppelte Funktion, nämlich die zur Stabilisierung der Schweißkonstruktion 9 und die Versorgungsmöglichkeit der Stützeinrichtungen 6 mit Druckfluid. Die Stützanordnung 22 innerhalb des Jochs kann dabei ein Normteil für unterschiedliche Biegeeinstellwalzen sein und bereits Bohrungen zu unterschiedlichen möglichen Positionen für Stützeinrichtungen aufweisen.

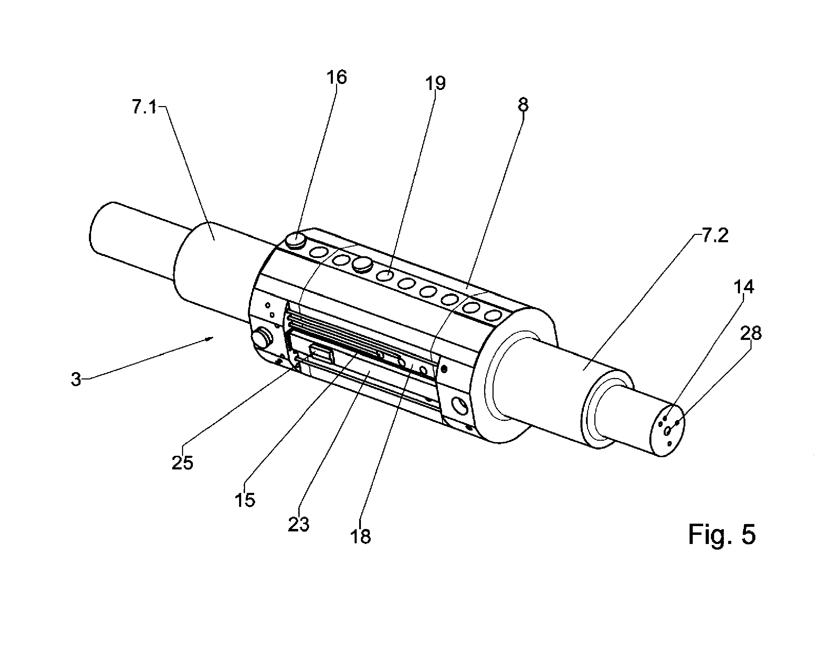

Mit der Figur 5 kann aufgrund der dreidimensionalen Darstellung der Achse 3 die Erfindung noch besser verstanden werden. Die Achse setzt sich aus drei Teilen zusammen, zwei Zapfen 7.1, 7.2 und dem dazwischen liegenden Joch. Im oberen Bereich erkennt man die Stützeinrichtungen 6, 16 oder zumindest die Zylinder 19, die für die Aufnahme der Kolben vorhanden sind und mit diesen zusammen die Stützeinrichtung bilden. Ihre Wirkrichtung gegen den nicht dargestellten Mantel weist auf das Gegendruckelement (beispielsweise eine Walze) und die dazwischen zu behandelnde Faserstoffbahn. Etwa im rechten Winkel zu der Wirkrichtung verlaufen an der Außenwandung 18 des Jochs 8 achsparallel die Versorgungsleitungen 15. Sie beginnen am radialen Austritt der Kanäle 14 aus den Zapfen 7.1, 7.2 und enden in Höhe der jeweilig zu versorgenden Stützeinrichtungen, wo sie mit der jeweiligen Anschlussleitung verbunden werden.

Außerdem ist in Figur 5 ein an die Wandung angebrachtes Profil, in diesem Fall ein U-Profil 23, wie man in Figur 3 und Figur 4 besser erkennt, dargestellt. Es ist verbunden mit wenigstens einem Schöpfer 25, der überschüssiges Druckfluid, also beispielsweise Öl, aus der Walze schöpft und damit für eine geringe benötigte Antriebsleistung der Walze sorgt.

Das Profil bildet quasi einen Ablaufkanal 24, in dem das Druckfluid zu einem Austrittskanal 28 aus der Walze gebracht wird. Zusätzlich dient er der Versteifung der Schweißkonstruktion des Jochs 8. Solche Profil könne auch noch andere Funktionen übernehmen, wie beispielsweise die Versorgung mit Kühlöl oder Schmiermitteln.

Von den dargestellten Ausführungsformen kann in vielfacher Hinsicht abgewichen werden, ohne den Grundgedanken der Erfindung zu verlassen. Insbesondere muss das Joch 8 nicht unbedingt aus zwei Platten 26 und zwei Deckeln 27 zusammengesetzt sein, sondern kann jede beliebige Kastenform aus unterschiedlichsten Blechen und Profilen bilden.

Bezugszeichenliste
- 1: Biegeeinstellwalze
- 2: Faserstoffbahn
- 3: Achse
- 4: Walzenmantel
- 5: Lager
- 6: Stützeinrichtung
- 7.1, 7.2: Zapfen
- 8: Joch
- 9: Schweißkonstruktion
- 10: Pressnip
- 11: Gegendruckelement
- 12: Querschnittsfläche des Jochs
- 13: Stirnfläche Zapfens
- 14: Kanal
- 15: Versorgungsleitung
- 16: Stützeinrichtung im Zapfen
- 17: Wandung
- 18: Außenwandung
- 19: Zylinder
- 20: Kolben
- 21: Anschlussleitung
- 22: Stützanordnung
- 23: Profil
- 24: Ablaufkanal
- 25: Schöpfer
- 26: Seitliche Platte
- 27: Deckel
- 28: Austrittskanal

## Patentansprüche

1. Biegeeinstellwalze (1) zur Behandlung einer Papier-, Karton-, Tissue- oder einer anderen laufenden Faserstoffbahn (2) in einer Maschine zur Herstellung und/oder Veredlung derselben, mit einem, um eine feststehende, in Lagern (5) abgestützte Achse (3) rotierbaren Walzenmantel (4), welcher von wenigstens einer Stützeinrichtung (6, 16) auf der Achse (3) zur Bildung eines Pressnips (10) für die Faserstoffbahn (2) in Richtung eines Gegendruckelementes (11) gedrückt wird,
**dadurch gekennzeichnet, dass** sich die Achse (3) aus zwei im wesentlichen rotationssymmetrischen Zapfen (7.1, 7.2) mit Lagerstellen und einem dazwischenliegenden und mit den beiden Zapfen (7.1, 7.2) verbundenen Joch (8) aufbaut.

2. Biegeeinstellwalze gemäß Anspruch 1, **dadurch gekennzeichnet, dass** das Joch (8) eine Schweißkonstruktion (9) ist.

3. Biegeeinstellwalze gemäß Anspruch 1 oder 2, **dadurch gekennzeichnet, dass** das Joch (8) die Form eines in Achsrichtung der Biegeeinstellwalze (1) langgezogenen und vorzugsweise hohlen Kastens aufweist.

4. Biegeeinstellwalze gemäß einem der Ansprüche 1 bis 3, **dadurch gekennzeichnet, dass** die Querschnittsfläche (12) des Jochs (8) an seinen Enden nicht größer ist als die Stirnfläche des Zapfens (13).

5. Biegeeinstellwalze gemäß einem der Ansprüche 1 bis 4, **dadurch gekennzeichnet, dass** die Walze über wenigstens einen Kanal (14) in wenigstens einem Zapfen (7.1, 7.2) mit einem Druckfluid versorgbar ist.

6. Biegeeinstellwalze gemäß einem der Ansprüche 1 bis 5, **dadurch gekennzeichnet, dass** in Fließrichtung des Druckfluids gesehen der wenigstens eine Kanal (14) axial in den Zapfen (7.1, 7.2) hinein- und radial aus dem Zapfen (7.1, 7.2) herausführt.

7. Biegeeinstellwalze gemäß einem der Ansprüche 5 oder 6, **dadurch gekennzeichnet, dass** wenigstens eine Versorgungsleitung (15) entlang der Wandung (17) des Jochs (8) von dem Kanal (14) zu der Stützeinrichtung (6) vorgesehen ist.

8. Biegeeinstellwalze gemäß Anspruch 7, **dadurch gekennzeichnet, dass** die wenigstens eine Versorgungsleitung (15) an einer Außenwandung (18) des Jochs (8) parallel zur Walzenachse befestigt ist und diese zumindest über ein Drittel ihrer Jochlänge überstreicht.

9. Biegeeinstellwalze gemäß einem der Ansprüche 1 bis 8, **dadurch gekennzeichnet, dass** wenigstens eine Stützeinrichtung (6) auf dem Joch mindestens einen Zylinder (19) für einen Kolben (20) eines hydrostatischen Stützelementes umfasst.

10. Biegeeinstellwalze gemäß Anspruch 9, **dadurch gekennzeichnet, dass** eine Anschlussleitung (21) für das Druckfluid aus der Versorgungsleitung (15) in den Zylinder (19) im Inneren des Jochs (8) untergebracht ist.

11. Biegeeinstellwalze gemäß Anspruch 10, **dadurch gekennzeichnet, dass** zumindest ein Teil der Anschlussleitung (21) in oder an einer Stützanordnung (22) der Schweißkonstruktion (9) untergebracht ist.

12. Biegeeinstellwalze gemäß einem der Ansprüche 1 bis 11, **dadurch gekennzeichnet, dass** wenigstens eine Stützeinrichtung (16) im Zapfen (7.1, 7.2) vorgesehen ist.

13. Biegeeinstellwalze gemäß einem der Ansprüche 1 bis 12, **dadurch gekennzeichnet, dass** das Joch (8) mit wenigstens einem Profil (23) verbunden ist, das als Ablaufkanal (24) für aus der Walze geschöpftes Druckfluid dient.
